# EUROPÄISCHE PATENTSCHRIFT

(11) **EP 3 066 957 B1**
(45) Veröffentlichungstag und Bekanntmachung des Hinweises auf die Patenterteilung: **04.04.2018**
(21) Anmeldenummer: 16154751.8
(22) Anmeldetag: 09.02.2016
(51) Int. Cl.: A47B 57/26, F16B 2/16, A47B 49/00, A47B 81/00

(54) **ANBRINGVORRICHTUNG FÜR EIN TRAGELEMENT AN EINER TRAGSÄULE EINES MÖBELS UND MÖBEL**
APPLICATOR FOR A SUPPORTING ELEMENT ON A SUPPORTING COLUMN FOR A PIECE OF FURNITURE AND FURNITURE
DISPOSITIF DE MONTAGE POUR UN ÉLÉMENT SUPPORT SUR UNE COLONNE PORTEUSE D'UN MEUBLE ET MEUBLE

(30) Priorität: 10.03.2015 DE 202015101212 U
(43) Veröffentlichungstag der Anmeldung: 14.09.2016
(73) Patentinhaber: Hetal-Werke Franz Hettich GmbH & Co. KG, 72275 Alpirsbach (DE)
(72) Erfinder: Abele, Horst, 78733 Aichhalden (DE)
(74) Vertreter: Patentanwälte Magenbauer & Kollegen Partnerschaft mbB

(56) Entgegenhaltungen:
- DE-U1-202010 002 230
- GB-A- 1 341 046
- US-B1- 6 783 104

## Beschreibung

Die Erfindung betrifft eine Anbringvorrichtung für ein Tragelement an einer Tragsäule eines Möbels nach dem Oberbegriff des Anspruchs 1 sowie ein Möbel.

### Stand der Technik

Um in einem Eckbereich eines Möbels einen vergleichsweise schwer erreichbaren Bereich als Stauraum nutzbar zu machen, ist es bekannt, innerhalb des Möbels eine senkrecht aufragende Tragsäule anzuordnen und an dieser mit einer Anbringvorrichtung ein Tragelement, zum Beispiel einen Tragboden, zum Beispiel drehbar, anzubringen. Beispielhafte Anbringvorrichtungen sind aus den Dokumenten DE 20 2010 002230 U1 und GB 1 341 046 A bekannt.

### Aufgabe und Vorteile der Erfindung

Der Erfindung liegt die Aufgabe zugrunde, eine Anbringvorrichtung für ein solches Möbel bereitzustellen, welches vergleichsweise kostengünstig herstellbar ist.

Die Aufgabe wird durch die Merkmale des Anspruchs 1 gelöst. Bevorzugte und vorteilhafte Ausführungen der Erfindung sind in den abhängigen Ansprüchen angegeben.

Die Erfindung geht von einer Anbringvorrichtung für ein Tragelement an einer Tragsäule eines Möbels aus, mit Arretiermitteln, mit denen sich das Tragelement an der aufragenden Tragsäule festsetzen lässt. Die Arretiermittel weisen einen Grundkörper auf, an dem ein Aufnahmeabschnitt vorgesehen ist, wobei der Aufnahmeabschnitt derart ausgestaltet ist, dass die Tragsäule in einem angeordneten Zustand an einem Anlagebereich an dem Aufnahmeabschnitt anliegt. Die Arretiermittel umfassen einen Klemmkörper und eine am Grundkörper ausgebildete Abstützeinrichtung. Der Klemmkörper wirkt, zum Beispiel zwischen zwei Anlagebereichen, auf die Tragsäule und ist mit der Abstützeinrichtung derart an der dem Anlagebereich des Aufnahmeabschnitts anliegenden Tragsäule andrückbar, dass die Tragsäule zwischen dem Anlagebereich und dem Klemmkörper eingespannt und kraftschlüssig anordenbar ist. Der Klemmkörper ist mit seiner Längsachse parallel oder im Wesentlichen parallel zu einer Längsachse der Tragsäule angeordnet.

Der Grundkörper kann beispielsweise zwei Bereiche umfassen, an welchen jeweils ein Aufnahmeabschnitt angeordnet ist. Die beiden Bereiche sind zum Beispiel über einen Verbindungsabschnitt fest miteinander verbunden. Der Verbindungsabschnitt verläuft beispielsweise parallel zu einer Längsachse einer montierten Tragsäule am Grundkörper.

Um eine erhöhte Stabilität des Grundkörpers zu erreichen, kann die Anbringvorrichtung vorzugsweise mehrere, insbesondere zwei oder drei, Verbindungsabschnitte am Grundkörper aufweisen.

Des Weiteren kann ein Verbindungsabschnitt in Form eines separaten Teils, insbesondere eines Blechteils vorliegen, dass mit dem restlichen Grundkörper fest verbunden ist. In einer bevorzugten Ausgestaltung weist der Aufnahmeabschnitt eine, insbesondere zwei Aufnahmeöffnungen auf. Die Aufnahmeöffnungen umfassen vorzugsweise einen Anlagebereich für die Tragsäule. Zumindest eine der Aufnahmeöffnungen ist zum Beispiel an einen äußeren Querschnitt der Tragsäule angepasst. Hierdurch kann ein Formschluss zwischen der Tragsäule und dem Aufnahmeabschnitt ermöglicht werden, so dass durch den Formschluss die Anbringvorrichtung gegenüber einer Verdrehung an der Tragsäule gesichert ist. Außerdem kann zumindest eine der Aufnahmeöffnungen umfänglich geschlossen sein. Insbesondere sind beide Aufnahmeöffnungen umfänglich geschlossen und eine Montage der Tragsäule ist durch Durchstecken erreichbar. Eine Vormontage der Anbringvorrichtung an der Tragsäule kann zum Beispiel bereits bei der Herstellung in einer Produktionsstätte erfolgen. Die Montage der Anbringvorrichtung an einer Tragsäule kann durch einen Roboter automatisiert und damit kostengünstig erfolgen.

Weiterhin vorteilhaft ist, dass die Längsachsen von Klemmkörper und Tragsäule nicht mehr als 20°, 15°, 10°, 5°, 4°, 3° zueinander verkippt angeordnet sind, vorzugsweise nicht mehr als 2°, insbesondere nicht mehr als 1° oder 0,5°.

In einer weiteren vorteilhaften Modifikation der Erfindung ist der Klemmkörper senkrecht zu seiner Längsachse versetzbar, insbesondere verschiebbar und/oder drehbar, am Grundkörper ausgebildet.

Der Klemmkörper kann vorzugsweise senkrecht zu seiner Längsachse und/oder zentrisch um die Längsachse der Tragsäule verschiebbar angeordnet sein und ist um seine Längsachse drehbar an einem Aufnahmeabschnitt angeordnet. Vorteilhafterweise lässt sich hierdurch die Position einer Kontaktfläche für eine reibkraftschlüssige Verbindung optimieren.

Durch eine drehbare und/oder verschiebbare Lagerung kann der Klemmkörper am Grundkörper zum Beispiel derart angeordnet sein, dass der Klemmkörper, beispielsweise beim Transport der Anbringvorrichtung, sich nicht aus seiner Lagerung, durch beispielsweise herausrutschen oder herausschieben, lösen kann. Ein Verlust des Klemmkörpers zum Beispiel beim Transport kann somit verhindert werden.

Der Klemmkörper kann beispielsweise aus Metall, vorzugsweise Stahl oder Aluminium, Holz, Kunststoff, Papier und/oder Karton, Glas oder einer Kombination der Materialien ausgebildet sein.

Vorteilhafterweise kann der Klemmkörper aus zwei unterschiedlichen Material-Komponenten ausgebildet sein, einer ersten festen inneren Material-Komponente, beispielsweise einem Metallkern, und einer zweiten äußeren Material-Komponente, die die erste Komponente in einem äußeren Bereich des Klemmkörpers überdeckt, zum Beispiel umschließt. Die zweite Material-Komponente kann aus einem vergleichsweise weichem Material mit einem vergleichsweise hohen Reibungskoeffizienten, zum Beispiel Gummi, ausgebildet sein.

Weiter weist der Klemmkörper einen an einer Stirnseite angeordneten Lagerzapfen auf, der in einem Lagerbereich, insbesondere des Aufnahmeabschnitts, des Grundkörpers eingreift.

Damit lässt sich ein Klemmkörper definiert in Bezug zum Grundkörper lagern. An gegenüberliegenden Stirnseiten des Klemmkörpers ist ein Lagerzapfen ausgebildet, der jeweils in einen Lagerbereich, zum Beispiel des jeweiligen Aufnahmeabschnitts, eingreift. Vorzugsweise kann der äußere Durchmesser des Lagerzapfens vergleichsweise kleiner als der äußere Durchmesser des Klemmkörpers sein.

Der Klemmkörper kann über die Lagerzapfen beidseitig in den Lagerbereichen zwischen den Aufnahmeabschnitten verschiebbar und um seine rotationssymmetrische Längsachse drehbar gelagert sein. Der Klemmkörper ist Bestandteil einer Exzenteranordnung, mit welcher die Tragsäule zwischen dem Anlagebereich und dem Klemmkörper kraftschlüssig anordenbar ist. Der Klemmkörper ist in Form eines Exzenters ausgebildet. Der Klemmkörper kann in seinem Querschnitt beispielsweise eine ovale Kontur aufweisen. Durch diese Ausbildung des Klemmkörpers kann die Tragsäule zwischen dem Anlagebereich und dem Klemmkörper vergleichsweise einfach kraftschlüssig eingespannt werden. Um eine Klemmung der Tragsäule zwischen dem Klemmkörper und dem Anlagebereich des Aufnahmeabschnitts zu erzielen, kann der Klemmkörper um seine Längsachse von einem nicht klemmenden in einen klemmenden Zustand gedreht werden. Die Bedienung des Klemmkörpers an der Anbringvorrichtung durch den Benutzer kann zum Beispiel durch einen einfachen Werkzeugzugriff realisiert sein. Denkbar ist auch ein manuell, werkzeuglos bedienbarer Klemmkörper.

Auch kann es vorstellbar sein, dass der Lagerbereich des Lagerzapfens zur Erzeugung einer kraftschlüssigen Verbindung zwischen dem Anlagebereich und dem Klemmkörper derart ausgebildet ist, den Klemmkörper im Lagerbereich im Sinne einer Exzenteranordnung von einem nicht klemmenden in einen klemmenden Zustand zu verschieben und/oder zu drehen.

Außerdem ist es denkbar, dass die Tragsäule Teil der Exzenteranordnung ist und derart ausgestaltet ist, dass durch einen einfachen Werkzeugzugriff, insbesondere auch durch einen manuell, werkzeuglos zu erfolgenden Handgriff die Tragsäule zwischen dem Anlagebereich oder den Anlagebereichen und dem Klemmkörper kraftschlüssig angeordnet werden kann. Beispielsweise kann die Tragsäule am Grundkörper angeordnet sein und der Grundkörper mit seinem Klemmkörper relativ zur Tragsäule in eine klemmende Position gedreht und/oder verschoben werden.

In einer weiteren vorteilhaften Ausgestaltungsform greift der Klemmkörper vorzugsweise mit einem Lagerzapfen in einen Lagerbereich, insbesondere des Aufnahmeabschnitts des Grundkörpers, ein. Abschnitte des Lagerbereichs, in welcher der Lagerzapfen geführt ist, verjüngen sich vorzugsweise in Richtung der klemmenden Position des Klemmkörpers auf dem Weg, von einer nicht klemmenden Position des Klemmkörpers in eine klemmende Position des Klemmkörpers.

Hierdurch kann ein schnelles Erreichen einer vordefinierten Klemmposition erreicht werden und eine Klemmung der Tragsäule zwischen dem Klemmkörper und zum Beispiel dem Anlagebereich des Aufnahmeabschnitts lässt sich vorteilhaft über einen vergleichsweise kurzen Weg zwischen der nicht klemmenden Position und der klemmenden Position des Klemmkörpers herstellen.

Des Weiteren vorteilhaft ist, dass der Grundkörper aus einem Metallblech ausgebildet ist.

Die Anbringvorrichtung und insbesondere der Grundkörper kann zu einem Großteil und gegebenenfalls vollständig als Blechteil aus einem Metall- oder Stahlblech ausgebildet sein, beispielsweise ausgestanzt und/oder ausgeschnitten und/oder gebogen. Zum Beispiel kann der Grundkörper, in einem automatisierten Arbeitsvorgang, zunächst aus einem Metallblech ausgestanzt und anschließend gebogen werden. Dadurch lässt sich die Anbringvorrichtung kostengünstig in großen Stückzahlen herstellen.

Ebenfalls denkbar ist, die Anbringvorrichtung und insbesondere den Grundkörper zu einem Großteil aus einem Kunststoff auszubilden. Mittels eines Kunststoffspritzverfahrens kann der Grundkörper beispielsweise kostengünstig in großen Stückzahlen hergestellt werden.

Auch ist es von Vorteil, dass das Tragelement am Grundkörper bewegbar angebracht ist.

Vorzugsweise ist das Tragelement am Grundkörper derart schwenkbar und/oder drehbar angeordnet, dass sich das Tragelement mittels der Anbringvorrichtung um die Längsachse der Tragsäule schwenken und/oder drehen lässt. Dadurch lässt sich die Anbringvorrichtung vorteilhaft an einer Tragsäule in einem Eckschrankmöbel verwenden, um einen Fachboden des Eckschranks in eine zugängliche Position zu bewegen.

### Beschreibung der Ausführungsbeispiele

Mehrere Ausführungsbeispiele der Erfindung werden anhand der nachstehenden schematischen Zeichnungen unter Angabe weiterer Einzelheiten und Vorteile näher erläutert. Es wird darauf hingewiesen, dass es sich bei der rotationssymmetrischen Ausführung des Klemmkörpers sowie bei der Bedienung über ein Druckelement nicht um einen Teil der Erfindung, sondern um einen Stand der Technik handelt, der das Verständnis der Erfindung erleichtert. Es zeigen:
- Figur 1: eine perspektivische Teilansicht einer Anbringvorrichtung an einer Tragsäule mit einem angeordneten Tragelement,
- Figur 2: eine weitere perspektivische Ansicht auf die Anbringvorrichtung aus Figur 1,
- Figur 3: eine Unteransicht auf die Anbringvorrichtung aus Figur 1 in Richtung einer Längsachse der Tragsäule mit einem teilweise transparent dargestellten unteren Bereich,
- Figur 4: eine perspektivische Darstellung eines Möbels mit einer Anbringsvorrichtung und Tragsäule gemäß Figuren 1-3 ohne angeordnete Tragböden und

- Figur 5: eine perspektivische Ansicht des Möbels aus Figur 4 mit angeordneten Tragböden.

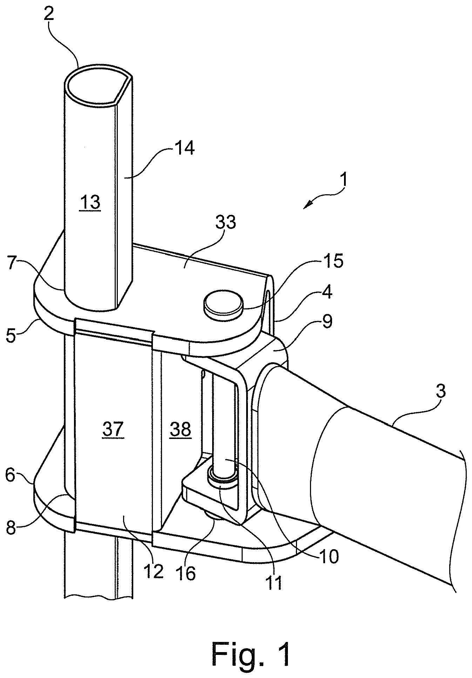

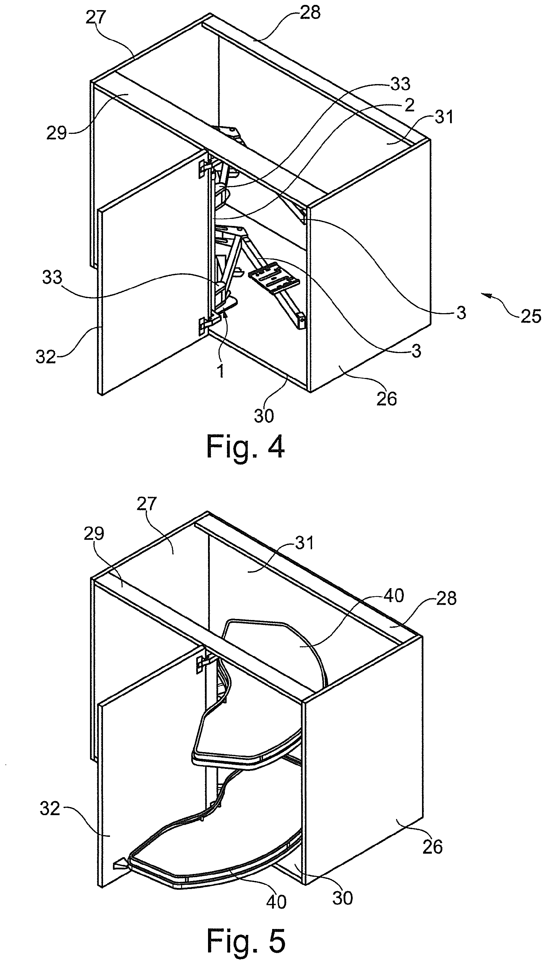

Figur 1 zeigt eine Anbringvorrichtung 1, welche an einer Tragsäule 2 angeordnet ist. An die Anbringvorrichtung 1 ist ein Tragelement 3, welches zum Beispiel zur Abstützung eines Tragbodens (siehe Figur 4) dient, schwenkbar angeordnet.
Der Grundkörper 33 der Anbringvorrichtung 1 besteht aus einem oberen Bereich 5 und einem unteren Bereich 6, welche über ein Verbindungselement 4 fest miteinander verbunden sind. Am oberen Bereich 5 ist ein Aufnahmeabschnitt 7 für die Tragsäule 2 ausgebildet und am unteren Bereich 6 ist ein weiterer Aufnahmeabschnitt 8 für die Tragsäule 2 ausgebildet. Zur Stabilisierung des Grundkörpers 33 ist zwischen dem oberen Bereich 5 und dem unteren Bereich 6 ein L-förmiges Verbindungselement 12 angeordnet. Eine erste Seite 37 eines ersten Schenkels des Verbindungselementes 12 bildet hierbei eine Außenseite des Grundkörpers 33 und ist dem Verbindungselement 4 gegenüber angeordnet. Eine zweite Seite 38 eines zweiten Schenkels des Verbindungselementes steht im Winkel z.B. senkrecht zur ersten Seite 37 des Verbindungselementes 4 und der zweite Schenkel stößt mit seiner schmalen Stirnseite 39 zum Beispiel an das Verbindungselement 4. Das Verbindungselement 12 ist beispielsweise an den oberen Bereich 5 und/oder den unteren Bereich 6 und/oder das Verbindungselement 4 angeklebt und/oder angeschweißt und/oder geklemmt.
Die Außenseite der teilweise zylinderförmigen Tragsäule 2 besteht aus einer Mantelfläche 13 und einer die Mantelfläche 13 schneidenden und zum Beispiel zu einer Tangente parallel versetzten Abflachung mit einer beispielsweise ebenen Fläche 14.
An einer schmalen Stirnseite des Tragelements 3 ist ein U-förmiges Verbindungselement 9 angeordnet. Das Verbindungselement 9 ist über einen zylinderförmig ausgebildeten Stift 10, welcher durch gegenüberliegende Schenkel des Verbindungselements 9 reicht an den Grundkörper 33 angeordnet. Über ein Lager 11, welches am Verbindungselement 9 vorgesehen ist, kann sich das Verbindungselement 9 an einen Aufnahmeabschnitt 15 am oberen Bereich 5 und an einen Aufnahmeabschnitt 16 am unteren Bereich 6 des Grundkörpers 33 um eine parallel zu einer Längsachse der Tragsäule 2 versetzten Achse drehen.

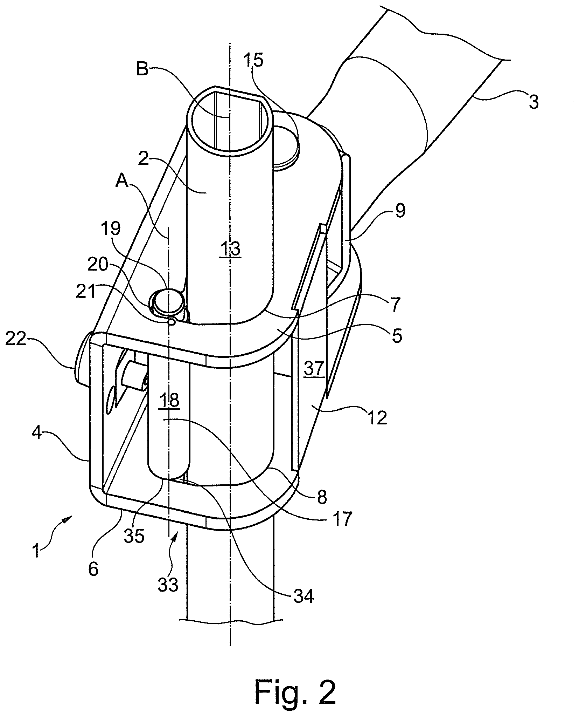

Ein Klemmkörper 17 ist zylinderförmig mit einer Mantelfläche 18 ausgebildet (Figur 2). Am Klemmkörper 17 ist ein oberer Lagerzapfen 19 und ein unterer Lagerzapfen 34 vorhanden, welcher am Aufnahmeabschnitt 7 bzw. 8 geführt ist. Der Klemmkörper 17 ist mit seiner Längsachse A parallel zur Längsachse B der Tragsäule 2 angeordnet.

Der obere Lagerzapfen 19 ist in einem oberen Lagerbereich 20 innerhalb des Aufnahmeabschnitts 7 angeordnet. Der untere Lagerzapfen 34 ist in einem unteren Lagerbereich 35 innerhalb des Aufnahmeabschnitts 8 angeordnet. Der Klemmkörper 17 ist außerdem in seinen oberen und unteren Lagerbereichen 20, 35 um seine Längsachse A drehbar und/oder senkrecht zu seiner Längsachse A verschiebbar angeordnet.

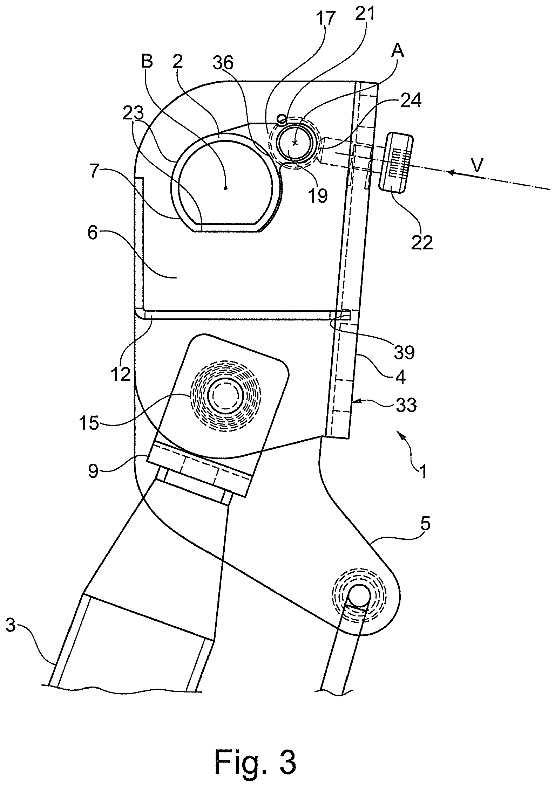

Die Aufnahmeabschnitte 7, 8 sind als Aufnahmeöffnungen für die Tragsäule 2 und die Lagerzapfen 19, 34 des Klemmkörpers 17 derart ausgestaltet, dass die umfängliche Kontur der Aufnahmeöffnungen annähernd und über einen großen Bereich passgenau und formschlüssig der äußeren Querschnittskontur der Tragsäule 2 entsprechen. In einem Teilbereich, welcher in Richtung eines Druckelements 22 am Aufnahmeabschnitt 7, 8 angeordnet ist, ist die Aufnahmeöffnung des Aufnahmeabschnitts 7, 8 als Lagerbereich 20, 35 für die Lagerzapfen 19, 34 ausgestaltet. Die umfängliche Kontur der Aufnahmeöffnung an den Lagerbereichen 20, 35 entspricht zum Beispiel dabei annähernd einer Querschnittskontur der Lagerzapfen 19, 34 und ist beispielsweise derart ausgestaltet, dass die Lagerzapfen 19, 34 in den Lagerbereichen 20, 35 in einer nicht klemmenden Position frei drehbar und/oder verschiebbar und/oder versetzbar in Richtung der Tragsäule 2 angebracht sind.
Zusätzlich ist eine Verjüngung der Aufnahmeöffnung des Aufnahmeabschnitts 7 an einem Abschnitt 21 vorgesehen. Der Abschnitt 21 ist ein Übergangsbereich zwischen dem Lagerbereich 20 und dem Bereich der Aufnahmeöffnung des Aufnahmeabschnitts 7, welcher der Querschnittskontur der Trägersäule 2 ähnlich ist. Die Konturverjüngung der Aufnahmeöffnung des Aufnahmeabschnitts 7 ist derart ausgestaltet, dass der Klemmkörper 17 über eine vergleichsweise kurze Strecke von einer nicht klemmenden Position in eine klemmende Position Klemmkörpers verschoben und/oder gedreht werden kann.
Außerdem ist ein im Verbindungselement 4 drehbar und/oder verschiebbar gelagertes Druckelement 22 vorgesehen, welches senkrecht zur Längsachse A des Klemmkörpers 17 mit seiner Stirnfläche 24 (siehe auch Figur 3) an die Mantelfläche 18 des Klemmkörpers 17 angedrückt werden kann, sodass die Tragsäule 2 zwischen dem andrückenden Klemmkörper 17 und den wirksamen Anlagebereichen 23 des Aufnahmeabschnitts 7 und des Aufnahmeabschnitts 8 kraftschlüssig fixiert ist.
Eine in der Regel notwendige Justage bzw. Höhenanpassung der Anbringvorrichtung 1 entlang der Längsachse B der Tragsäule 2 kann durch einen Monteur dadurch vergleichsweise einfach bei der Installation eines Möbels 25 insbesondere stufenlos erfolgen.
Exemplarisch sind in Figur 3 Anlagebereiche 23 angedeutet, an denen die Tragsäule 2 an den Aufnahmeabschnitten 7, 8 zwischen dem Klemmkörper 17 und den Aufnahmeabschnitten 7, 8 kraftschlüssig in Kontakt ist. Das Druckelement 22 drückt mit seiner Stirnfläche 24 mit einer Kraft mit einem Kraftvektor V senkrecht zur Längsachse A des Klemmkörpers 17 in Richtung der Längsachse A auf die Mantelfläche 18 des Klemmkörpers 17. Hierdurch werden über den Klemmkörper 17 die Lagerzapfen 19 und 34 des Klemmkörpers 17, auf einer der Tragsäule 2 abgewandten Seite, gegen den Aufnahmeabschnitt 7, 8 gedrückt. Außerdem wird die Mantelfläche 18 des Klemmkörpers 17 mit einer Außenseite, welche einen Klemmbereich 36 bildet, gegen die Mantelfläche 13 der Tragsäule 2 gedrückt. Die Richtung des Kraftvektors V des Druckelementes 22 ist hierbei vorzugsweise tangential zur Mantelfläche 13 der Tragsäule 2.

In Figur 4 und 5 ist das Möbel 25 mit einer Außenwand 26 und einer Außenwand 27 gezeigt. Die Oberseite des Möbels 25 ist offen und durch zwei Querverstrebungen 28 und 29 zur Stabilisierung ausgestaltet. Weiterhin gezeigt ist ein Möbelboden 30, eine Möbelrückwand 31 und eine Möbelfront 32. Die Möbelfront 32 ist als Möbeltür ausgebildet und in einem offenen Zustand dargestellt. Weiterhin ist eine Anbringvorrichtung 1 mit einem Grundkörper 33 an einer Tragsäule 2 mit Tragelementen 3 gezeigt.
Gemäß Figur 5 ist das Möbel 25 aus Figur 4 dargestellt. Über die verdeckten Tragelementen 3 sind parallel ausgerichtete und vertikal versetzte Fachböden 40 an der Anbringvorrichtung 1 angeordnet.

### Bezugszeichenliste:

- 1: Anbringvorrichtung
- 2: Tragsäule
- 3: Tragelement
- 4: Verbindungselement
- 5 - 6: Bereich
- 7 - 8: Aufnahmeabschnitt
- 9: Verbindungselement
- 10: Stift
- 11: Lager
- 12: Verbindungselement
- 13: Mantelfläche
- 14: Fläche
- 15 - 16: Aufnahmeabschnitt
- 17: Klemmkörper
- 18: Mantelfläche
- 19: Lagerzapfen
- 20: Lagerbereich
- 21: Abschnitt
- 22: Druckelement
- 23: Anlagebereich
- 24: Stirnfläche
- 25: Möbel
- 26 - 27: Außenwand
- 28 - 29: Querverstrebung
- 30: Möbelboden
- 31: Möbelrückwand
- 32: Möbelfront
- 33: Grundkörper
- 34: Lagerzapfen
- 35: Lagerbereich
- 36: Klemmbereich
- 37 - 38: Seite
- 39: Stirnseite
- 40: Fachboden

## Patentansprüche

1. Anbringvorrichtung (1) für ein Tragelement (3) an einer Tragsäule (2) eines Möbels (25), mit Arretiermitteln, mit denen sich das Tragelement (3) an der aufragenden Tragsäule (2) festsetzen lässt, wobei die Arretiermittel einen Grundkörper (33) aufweisen, an dem ein Aufnahmeabschnitt (7,8) vorgesehen ist, wobei der Aufnahmeabschnitt (7,8) derart ausgestaltet ist, dass die Tragsäule (2) in einem angeordneten Zustand an einem Anlagebereich (23) an dem Aufnahmeabschnitt (7,8) anliegt, wobei die Arretiermittel einen Klemmkörper (17) und eine am Grundkörper (33) ausgebildete Abstützeinrichtung umfassen, wobei der Klemmkörper (17) auf die Tragsäule (2) wirkt und wobei der Klemmkörper (17) mit der Abstützeinrichtung derart an der an dem Anlagebereich (23) des Aufnahmeabschnitts (7,8) anliegenden Tragsäule (2) andrückbar ist, dass die Tragsäule (2) zwischen dem Anlagebereich (23) und dem Klemmköper (17) eingespannt und kraftschlüssig anordenbar ist, wobei der Klemmkörper (17) mit seiner Längsachse parallel oder im Wesentlichen parallel zu einer Längsachse der Tragsäule (2) anordenbar ist, **dadurch gekennzeichnet, dass** der Klemmkörper (17) an gegenüberliegenden Stirnseiten angeordnete Lagerzapfen (19,34) aufweist, die jeweils in einen Lagerbereich (20, 35) des Grundkörpers (33) eingreifen, wobei der Klemmkörper (17) Bestandteil einer Exzenteranordnung ist, mit welcher die Tragsäule (2) zwischen dem Anlagebereich (23) des Aufnahmeabschnitts (7,8) und dem Klemmkörper (17) kraftschlüssig anordenbar ist, und wobei der Klemmkörper (17) in Form eines Exzenters ausgebildet ist, der um seine Längsachse von einem nicht klemmenden in einen klemmenden Zustand gedreht werden kann.

2. Anbringvorrichtung (1) nach Anspruch 1, **dadurch gekennzeichnet, dass** der Klemmkörper (17) senkrecht zu seiner Längsachse versetzbar am Grundkörper (33) angeordnet ist.

3. Anbringvorrichtung (1) nach einem der vorgenannten Ansprüche, **dadurch gekennzeichnet, dass** der Klemmkörper (17) mit einem Lagerzapfen (19,34) in einen Lagerbereich (20,35), insbesondere des Aufnahmeabschnitts (7,8) des Grundkörpers (33), eingreift und Abschnitte des Lagerbereichs (20,35), in welcher der Lagerzapfen (19,34) geführt ist, sich in Richtung der klemmenden Position des Klemmkörpers (17) auf dem Weg, von einer nicht klemmenden Position des Klemmkörpers (17) in eine klemmende Position des Klemmkörpers (17), verjüngen.

4. Anbringvorrichtung (1) nach einem der vorgenannten Ansprüche, **dadurch gekennzeichnet, dass** der Grundkörper (33) aus einem Metallblech ausgebildet ist.

5. Anbringvorrichtung (1) nach einem der vorgenannten Ansprüche mit einem Tragelement (3), **dadurch gekennzeichnet, dass** das Tragelement (3) am Grundkörper (33) bewegbar angebracht ist.

6. Möbel (25) mit einer Anbringvorrichtung (1) nach einem der vorgenannten Ansprüche.

## Claims

1. Attaching fixture (1) for a support element (3) on a support column (2) of a piece of furniture (25), with locking means with which the support element (3) may be fixed to the upwards-extending support column (2), wherein the locking means have a base body (33) on which is provided a locating section (7, 8), wherein the locating section (7, 8) is so designed that the support column (2) in a fitted state abuts a contact zone (23) on the locating section (7, 8), wherein the locking means comprise a clamping body (17) and a support fixture formed on the base body (33), wherein the clamping body (17) acts on the support column (2) and wherein the clamping body (17) may be pressed by the support fixture against the support column (2) abutting the contact zone (23) of the locating section (7, 8) in such a way that the support column (2) may be clamped and friction-locked between the contact zone (23) and the clamping body (17), wherein the clamping body (17) may be arranged with its longitudinal axis parallel or substantially parallel to a longitudinal axis of the support column (2), **characterised in that** the clamping body (17) has on opposite end faces bearing pins (19, 34), each engaging in a bearing zone (20, 35) of the base body (33), wherein the clamping body (17) is part of an eccentric arrangement by which the support column (2) may be fitted with friction-locking between the contact zone (23) of the locating section (7, 8) and the clamping body (17), and wherein the clamping body (17) is in the form of an eccentric which may be rotated around its longitudinal axis from a non-clamping into a clamping state.

2. Attaching fixture (1) according to claim 1, **characterised in that** the clamping body (17) is fitted so as to be displaceable on the base body (33), perpendicular to its longitudinal axis.

3. Attaching fixture (1) according to any of the preceding claims, **characterised in that** the clamping body (17) engages with a bearing pin (19, 34) in a bearing zone (20, 35), in particular of the locating section (7, 8) of the base body (33), and sections of the bearing zone (20, 35) in which the bearing pin (19, 34) is guided taper in the direction of the clamping position of the clamping body (17), on the way from a non-clamping position of the clamping body (17) into a clamping position of the clamping body (17).

4. Attaching fixture (1) according to any of the preceding claims, **characterised in that** the base body (33) is made out of a metal sheet.

5. Attaching fixture (1) according to any of the preceding claims with a support element (3), **characterised in that** the support element (3) is movably attached to the base body (33).

6. Piece of furniture (25) with an attaching fixture (1) according to any of the preceding claims.

## Revendications

1. Dispositif de montage (1) pour un élément support (3) sur une colonne porteuse (2) d'un meuble (25), avec des moyens de blocage, avec lesquels l'élément support (3) se laisse fixer sur la colonne porteuse (2) se dressant, dans lequel les moyens de blocage présentent un corps de base (33), au niveau duquel une section de réception (7, 8) est prévue, dans lequel la section de réception (7, 8) est configurée de telle sorte que la colonne porteuse (2) s'appuie dans un état agencé au niveau d'une zone d'appui (23) contre la section de réception (7, 8), dans lequel les moyens de blocage comprennent un corps de serrage (17) et un dispositif de soutien réalisé sur le corps de base (33), dans lequel le corps de serrage (17) agit sur la colonne porteuse (2) et dans lequel le corps de serrage (17) avec le dispositif de soutien peut être pressé contre la colonne porteuse (2) s'appuyant contre la zone d'appui (23) de la section de réception (7, 8), de telle sorte que la colonne porteuse (2) est serrée entre la zone d'appui (23) et le corps de serrage (17) et peut être agencée par force, dans lequel le corps de serrage (17) avec son axe longitudinal peut être agencé parallèlement ou de manière sensiblement parallèle à un axe longitudinal de la colonne porteuse (2), **caractérisé en ce que** le corps de serrage (17) présente des tourillons (19, 34) agencés au niveau de faces frontales opposées, qui entrent en prise respectivement dans une zone de palier (20, 35) du corps de base (33), dans lequel le corps de serrage (17) fait partie d'un agencement excentrique, avec lequel la colonne porteuse (2) peut être agencée par force entre la zone d'appui (23) de la section de réception (7, 8) et le corps de serrage (17), et dans lequel le corps de serrage (17) est réalisé sous forme d'un excentrique, qui peut être tourné autour de son axe longitudinal d'un état de non-serrage à un état de serrage.

2. Dispositif de montage (1) selon la revendication 1, **caractérisé en ce que** le corps de serrage (17) est agencé au niveau du corps de base (33) de manière déplaçable perpendiculairement à son axe longitudinal.

3. Dispositif de montage (1) selon l'une quelconque des revendications précédentes, **caractérisé en ce que** le corps de serrage (17) entre en prise avec un tourillon (19, 34) dans une zone de palier (20, 35), en particulier de la section de réception (7, 8) du corps de base (33), et des sections de la zone de palier (20, 35), dans laquelle le tourillon (19, 34) est guidé, se rétrécissent en direction de la position de serrage du corps de serrage (17), d'une position de non-serrage du corps de serrage (17) à une position de serrage du corps de serrage (17).

4. Dispositif de montage (1) selon l'une quelconque des revendications précédentes, **caractérisé en ce que** le corps de base (33) est réalisé en une tôle métallique.

5. Dispositif de montage (1) selon l'une quelconque des revendications précédentes avec un élément support (3), **caractérisé en ce que** l'élément support (3) est monté mobile sur le corps de base (33).

6. Meuble (25) avec un dispositif de montage (1) selon l'une quelconque des revendications précédentes.
